# EUROPEAN PATENT APPLICATION

(11) **EP 1 544 346 A2**
(43) Date of publication of application: **22.06.2005**
(21) Application number: 04468025.4
(22) Date of filing: 16.12.2004
(51) Int. Cl.: D06F 39/12, A47L 15/42

(54) **A worktop of a household washing or drying appliance**

(30) Priority: 18.12.2003 SI 200300311
(71) Applicant: Gorenje d.d., 3503 Velenje (SI)
(72) Inventor: Uplaznik, Janez, 3302 Grize (SI); Katanec, Joze, 3325 Sostanj (SI); Oresnik, Bojan, 3327 Smartno ob Paki (SI); Lah, Joze, 3320 Velenje (SI); Kosec, Franc, 3313 Polzela (SI); Gosnik, Dusan, 3210 Slovenske Konice (SI)
(74) Representative: Primozic, Alenka

(57) **Abstract**

A worktop of a household washing or drying appliance consisting of a basic board (1) and a peripheral profile (2) manufactured of a thermoplastic material, whereby the frame (2) is unique and manufactured directly to the board (1) following the method of spraying of thermoplastic material. Said method assures tight sealing of the frame (2) to the board (1) and simultaneously contributes to simple, quick, quality and price efficient batch production and allows free designs of visible parts in the sense of industrial designs.

## Description

### Subject of Invention

The subject of the invention is a worktop of a household washing or drying appliance, i.e. the upper board of an appliance covering the appliance and at the same time serving as a work desk and/or deposit desk of an appliance.

### Technical Problem

The technical problem solved by the invention is how to conceive such worktop of a household washing or drying appliance that would be perfectly resistant during the entire declared life of the appliance, resistant to humidity, be solid enough to withstand the expected loads of the board as a work desk and/or deposit surface, have protected internal, especially electric and electronic elements of the appliance and moreover its structure will allow a simple manufacturing procedure so that the manufacturing price would correspond to the price class of the appliance as a whole and would simultaneously also offer opportunities for various design variants of the outer appearance.

### Prior Art

Known worktops of this type consist of a basic board, preferably manufactured from a prefabricated flake board, bordered with a peripheral profile, preferably of a thermoplastic material. In the aesthetic or design sense the peripheral profile can be of various variants, it is basically a U-profile attached to the edge of a board and fastened to it with clamps or glue sealing substances. Both examples follow a multi-step labour process that is very time consuming and consequently relatively expensive. Fastening with clamps is faster, yet does not assure good sealing over the entire life cycle of an appliance.

There are also multi-part peripheral profiles that shorten the assembly time, yet to the detriment of quality.

Moreover, there is a known variant with a two-part peripheral element, i.e. upper rectangular frame and bottom fastening profiles adapted to fix a board to an appliance. The frame and the bottom profiles are fastened with epoxy resins. This variant assures good sealing, the installation is time-consuming, though.

There is also a variant, in which the edge of the board is bordered from the upper side by a rectangular frame. From the bottom side, this profile is connected with a second profile to form a common profile, which entirely tightly seals the edge of the board. This variant assures good sealing, but is quite expensive due to time-consuming installation.

### Solution to the Technical Problem

The described technical problem is solved by a new variant of a worktop of this type and a manufacturing procedure. The essential characteristic of this variant is in that an optional board, preferably a flake board, is designed with a peripheral profile, which entirely tightly borders the peripheral area of the board, said frame having on the bottom side also elements for fastening said board to an appliance, whereby said profile is manufactured with a spraying method directly to the board.

Such direct manufacturing of a peripheral frame to the board by spraying a thermoplastic material in one labour method contributes to a tight fitting of a frame to the board and at the same time to short installation time. When large quantities of boards are manufactured in this way, the price of the entire board is also low, despite the investment into a relatively demanding tool for spraying the peripheral profile directly to the board.

The described embodiment of the board and the manufacturing method therefor offers relatively many opportunities for the design of the external appearance of the board without any detriment to its applicability.

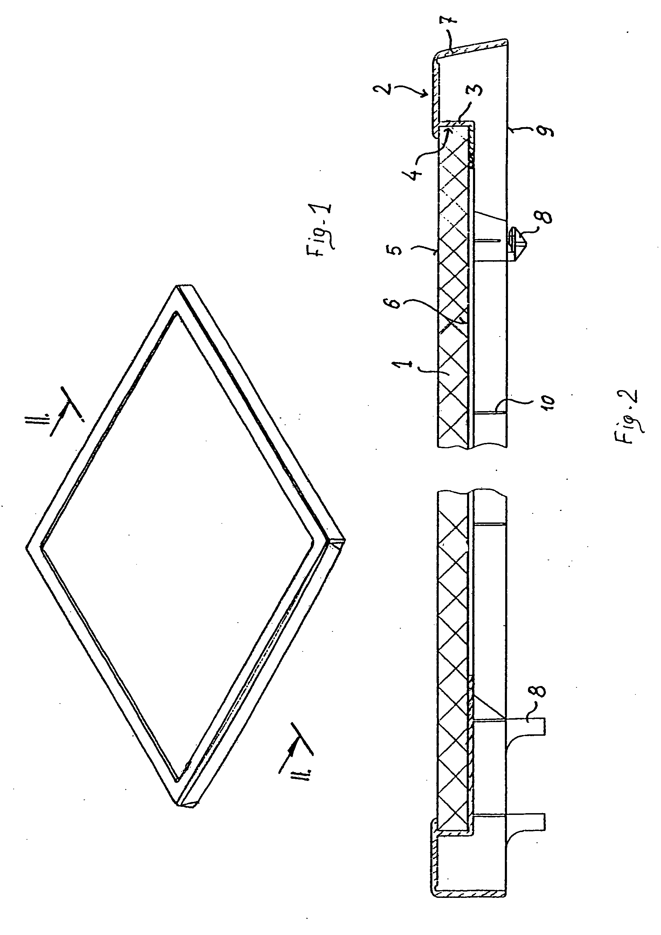

The invention will now be described in more detail in the continuation with a description of an embodiment and the enclosed drawings, in which
Fig. 1 shows a perspective view of the board of the invention; and
Fig. 2 longitudinal cross-section of the board along the line II-II of Fig. 1

A worktop of a household washing or drying appliance consists of a basic board 1, preferably of a rectangular shape and optionally coated on the work side, i.e. visible side with a protecting and decorative foil, and of a peripheral profile 2, which is unique and manufactured of a thermoplastic material directly to the board 1 with a spraying method.

The frame 2 tightly encompasses with its internal part 3, having in the cross-section preferably a shape of a non-symmetrical U-profile, an edge 4 of the board 1 and simultaneously also the edge of the upper and lower surface 5, 6 of the board 1. The internal part 3 of the frame 2 is extended with an external part 7 in the level of the board 1, said external part being implemented as a hollow profile with an optional aesthetic expression. This external part 4 has protrusions 8 for the fastening of the board 1 to the appliance, which is not shown on figures. The external part 7 preferably reaches with its free bottom edge 9 from the below the surface of the bottom panel 6 of the board 1 and contains armouring ribs 10 on the internal sides.

The manufacturing method of the board is as follows: a prefabricated board 1 is inserted into a casting mould for spraying plastics to a precisely defined place, then a known mode of spraying of thermoplastics is used to implement a frame 2 in a way that it precisely fits the joints of the board 1. After the board 1 is bordered with the frame 2, the board is taken from the mould as a final product.

## Claims

1. A worktop of a household washing or drying appliance consisting of a basic board (1), preferably of a rectangular shape and optionally coated on the work side, i.e. visible side with a protecting and decorative foil, and of a peripheral profile (2) manufactured of a thermoplastic material, **characterized in that** the frame (2) is unique and manufactured directly to the board (1) with a spraying method.

2. Worktop according to claim 1, **characterized in that** a frame (2) tightly encompasses with its internal part (3), having in the cross-section preferably a shape of a non-symmetrical U-profile, an edge (4) of the board (1) and simultaneously also the edge of the upper and lower surface (5, 6) of the board (1), whereby the internal part (3) of the frame (2) is extended with an external part (7) in the level of the board (1), said external part being implemented as a hollow profile with an optional aesthetic expression.

3. Worktop according to claims 1 and 2, **characterized in that** on the frame (2) there are protrusions (8) for the fastening of the board (1) to the appliance.

4. Method of manufacturing of a work board, **characterized in that** a prefabricated board (1) is inserted into a casting mould for spraying plastics to a precisely defined place, then a known mode of spraying of thermoplastics is used to implement a frame (2) in a way that it precisely fits the joints of the board (1) and after the board (1) is bordered with the frame (2), said board is taken from the mould as a final product.
